# EUROPEAN PATENT APPLICATION

(11) **EP 1 771 032 A2**
(43) Date of publication of application: **04.04.2007**
(21) Application number: 06250509.4
(22) Date of filing: 31.01.2006
(51) Int. Cl.: H04Q 7/38

(54) **Hsdpa wireless communication system**

(30) Priority: 29.09.2005 JP 2005284262
(71) Applicant: FUJITSU LIMITED, Kawasaki-shi, Kanagawa 211-8588 (JP)
(72) Inventor: Haraguchi, Syuichi Fujitsu Kyushu Network, Fukuoka-shi, Fukuoka 814-8588 (JP); Erami, Akihisa Fujitsu Kyushu Network, Fukuoka-shi, Fukuoka 814-8588 (JP); Senkoushi, Hideo Fujitsu Kyushu Network, Fukuoka-shi, Fukuoka 814-8588 (JP)
(74) Representative: Fenlon, Christine Lesley

(57) **Abstract**

A wireless (radio) communication system (SYS) having a high speed packet communication function, which is based on an HSDPA (High Speed Downlink Packet Access) system, the wireless communication system (SYS) including a base station control device (1), the base station control device (1) including a unit receiving from a handover source base station, when handover of a wireless terminal (3) occurs between plural base stations (2) under control, residual packet information about a packet remaining untransmitted to the wireless terminal (3) from the handover source base station (2), and a unit transmitting, when receiving the residual packet information, a packet corresponding to the residual packet information to a handover destination base station (2) in preference to a packet in a next transmission standby status.

## Description

### BACKGROUND OF THE INVENTION

The invention relates to a wireless (radio) communication system capable of providing a high-speed packet communication function based on an HSDPA (High Speed Downlink Packet Access) system, and more particularly to a mobile communication system capable of restraining a decrease in throughput when handover takes place.

According to the HSDPA system in IMT (International Mobile Telecommunications) 2000 for actualizing the high speed packet communications, especially, downlink high speed packet transmission, when a wireless terminal (mobile terminal) moves to (visits) a neighboring base station during the high speed packet communications and when the handover occurs, a base station control device needs to execute switchover (handover) control to transfer downlink packet data to a handover destination (mobile destination) base station from a handover source (mobile source) base station.

Normally, the base station, in order to transmit a large quantity of data to the wireless terminal when coming to a good state of radio waves, has packets transmitted from the base station control device and reserve the packets so that a packet buffer in the base station is buffered all with the packets. When the handover occurs and the transfer destination base station is thus switched over, however, it follows that not-yet-arrived (not-yet-transmitted) packets to the wireless terminal remain in the handover source base station.

In a prior art wireless communication system, the residual packets in the handover source base station are discarded, after the switchover by the handover of the wireless terminal, a retransmission request is issued on an RLC (Radio Link Control) layer where arrival acknowledgement is sent and received between the wireless terminal and the base station control device, and all the discarded packets are retransmitted again from the base station control device, thereby preventing occurrence of a data loss.

According to this prior art, however, when the handover takes place, the not-yet-arrived packets remain in the handover source base station and are eventually discarded, and besides, if a higher RLC layer is of an arrival non-acknowledgment type, the occurrence of the data loss is inevitable on the side of the wireless terminal because of not retransmitting the packets.

As a technology for solving this problem, Japanese Patent Application Laid-Open Publication No. 2004-282652 (Patent document 1) discloses a technology, wherein FP (Frame Protocol) employed for transferring between the base station control device and the base station is provided afresh with a sequence number field, the packets are managed in comparison with a packet transfer state within the base station to the wireless terminal, and the residual packets are transferred on an FP basis to the handover destination base station.

Further, Japanese Patent Application Laid-Open Publication No. 2003-319432(Patent document 2) discloses a technology, wherein when judging that there is a necessity of performing the handover between the plural base stations, the base station control device notifies the handover source base station and the handover destination base station of head packet information of multicasting target packet data, the handover source base station gives the base station control device a transmission completion notification of a packet just anterior to the packet of the head packet information of which the handover source base station has been notified, a handover-enabled status thereby occurs, the handover destination base station in a post-handover status transmits the packets starting from the packet specified by the notified head packet information to the wireless terminal.

The prior art described above has such a problem that when the handover occurs due to the movement of the wireless terminal during the high speed packet communications based on the HSDPA system, there is no alternative but to discard the residual packets that can not be transmitted by the handover source base station. Further, when starting the communications with the handover destination base station, the packet to be received first by the wireless terminal is a next packet that skips over all the discarded packets, and the wireless terminal issues the retransmission request on the RLC layer where the arrival acknowledgment is sent and received between the wireless terminal and the base station control device, whereby recovery is attained by retransmitting all the discarded packets again from the base station control device. A futile period of time occurs due to this retransmission, and hence a decrease in throughput is inevitable.

Moreover, the technology disclosed in Japanese Patent Application Laid-Open Publication No. 2004-282652 has a problem in which a physical line (wired line) for transferring the not-yet-arrived packet on the FP-basis to the handover destination base station is, as a rule, connected only via the base station control device, and therefore, in addition to occurrence of an uplink traffic for temporarily sending the FP back to the base station control device, the operation is enabled only under the same base station control device because of the transfer between the plural base stations.

Further, the technology disclosed in Japanese Patent Application Laid-Open Publication No. 2003-319432 requires multicasting the packet to the handover source base station and the handover destination base station before the handover takes place. In the conventional HSDPA system, however, the base station determines a bandwidth which is granted to transmit corresponding to a wireless status with respect to the wireless terminal and sends the determined bandwidth through on a flow control packet to the base station control device, thereby effecting flow control of controlling a quantity of the packets to be transmitted from the base station control device. The technology described in the same publication is, however, hard to actualize in consideration of this flow control.
[Patent document 1] Japanese Patent Application Laid-Open Publication No.2004-282652
[Patent document 2] Japanese Patent Application Laid-Open Publication No.2003-319432
[Patent document 3] Japanese Patent Application Laid-Open Publication No.2004-80640

### SUMMARY OF THE INVENTION

Accordingly, it is desirable to provide a technology capable of restraining a decrease in throughput due to retransmission data when handover occurs between base stations for a wireless terminal during high-speed packet communications based on an HSDPA system.

According to an embodiment of the invention, a wireless communication system having a high-speed packet communication function, which is based on an HSDPA (High Speed Downlink Packet Access) system, includes a base station control device,
the base station control device comprising:
means receiving from a handover source base station, when handover of a wireless terminal occurs between plural base stations under control, residual packet information about a packet remaining untransmitted to the wireless terminal from the handover source base station; and
means transmitting, when receiving the residual packet information, a packet corresponding to the residual packet information to a handover destination base station in preference to a packet in a next transmission standby status.

According to an embodiment of the invention, a base station control device to be applied to a wireless communication system having a high-speed packet communication function, which is based on an HSDPA system, comprises:
means receiving from a handover source base station, when handover of a wireless terminal occurs between plural base stations under control, residual packet information about a packet remaining untransmitted to the wireless terminal from the handover source base station; and
means transmitting, when receiving the residual packet information, a packet corresponding to the residual packet information to a handover destination base station in preference to a packet in a next transmission standby status.

According to an embodiment of the invention, a base station to be applied to a wireless communication system having a high-speed packet communication function, which is based on an HSDPA system, comprises:
means notifying a base station control device of, when handover of a wireless terminal occurs, residual packet information about a packet remaining untransmitted to the wireless terminal.

According to an embodiment of the invention, a control method executed in a base station control device of a wireless communication system having a high-speed packet communication function, which is based on an HSDPA system, the control method comprises:
receiving from a handover source base station, when handover of a wireless terminal occurs between plural base stations under control, residual packet information about a packet remaining untransmitted to the wireless terminal from the handover source base station; and
transmitting, when receiving the residual packet information, a packet corresponding to the residual packet information to a handover destination base station in preference to a packet in a next transmission standby status.

In each embodiment of the invention, the residual packet information can be specified by a sequence number of an RLC PDU (Radio Link Control Protocol Data Unit) frame. Further, the residual packet information can be specified by a control message of an IP (Internal Protocol) frame. Still further, the residual packet information can be specified by control information of a UL HS-DSCH (Up Link High Speed-Downlink Shared Channel) frame.

According to an embodiment of the invention, when the handover occurs between the base stations for the wireless terminal during the high speed packet communications based on the HSDPA system, the handover source base station transmits the residual packet information about the not-yet-transmitted packets to the base station control device, and scheduling is thereby conducted so that the not-yet-arrived packets are transmitted to the handover destination base station in preference to the packets scheduled to be transmitted from the base station control device before the handover, whereby a decrease in throughput can be restrained by eliminating a retransmission request from the wireless terminal and accordingly eliminating a futile period of time and a futile traffic that occur due to the retransmission data.

### BRIEF DESCRIPTION OF THE DRAWINGS

FIG.1 is a block diagram showing an architecture of a mobile communication system in one embodiment of the invention;
FIG.2 is a block diagram showing detailed configurations of a base station control device and a base station in the mobile communication system illustrated in FIG. 1;
FIG.3 is a sequence diagram showing a procedure of a wireless communication control method in one embodiment;
FIG.4 is a diagram showing a format of an RLC PDU frame;
FIG.5 is a diagram showing a format of an IP frame; and
FIG. 6 is a diagram showing a format of a UL HS-DSCH frame.

### DETAILED DESCRIPTION OF THE PREFERRED EMBODIMENTS

Embodiments of the invention will hereinafter be described in greater detail with reference to the accompanying drawings. A preferred embodiment of the invention is illustrated in the drawings. Embodiments of the invention can be, however, carried out in multiple different modes and should not be construed in a way limited to the embodiment described in the specification. The embodiment is rather so provided as to render the disclosure of the specification thorough and complete and to sufficiently convey the scope of the invention to those skilled in the art.

### [Architecture of Mobile Communication System]

### (Mobile Communication System)

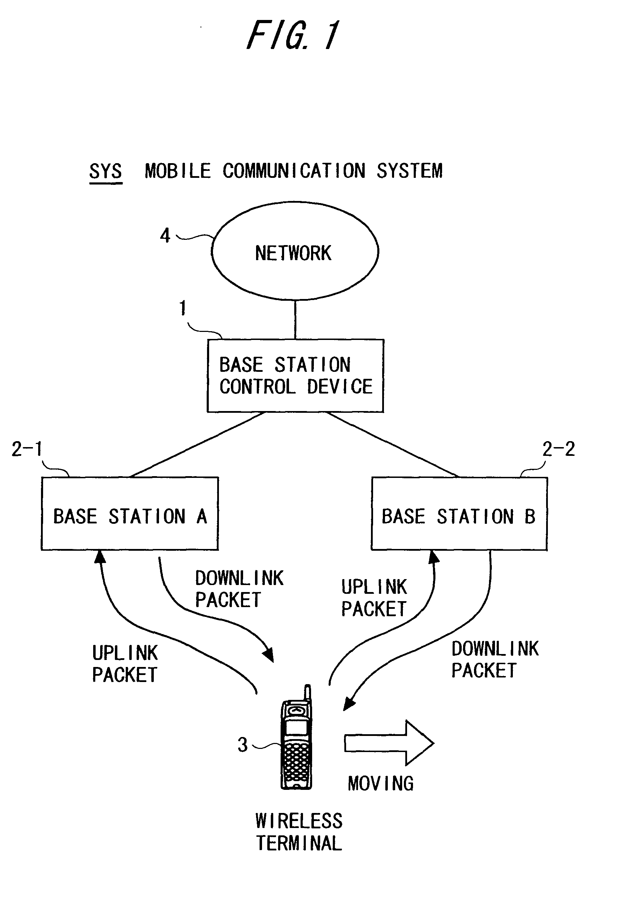

Referring to FIG. 1 illustrating a system architecture in one embodiment of the invention, a wireless communication system (mobile communication system) SYS in an HSDPA (High Speed Downlink Packet Access) system includes a base station control device 1, base stations (A) 2-1 and (B) 2-2, a wireless terminal 3 and a network 4 connected to the base station control device 1. Herein, the wireless terminal 3 is a mobile terminal such as a cellular phone terminal serving as a mobile station that supports high-speed packet communications based on the HSDPA system. Further, the network 4 is a core network including a packet switched network (PSN).

FIG. 1 illustrates a status, wherein the wireless terminal 3, which is in the middle of performing the high speed packet communications (particularly during downlink high speed packet transmission) based on the HSDPA system with the base station 2-1, moves toward a service area (wireless zone) of the neighboring base station. The base station control device 1 connected to the network 4 controls handover (which is switchover for a service between the base stations) of the wireless terminal 3 between the base station 2-1 and the base station 2-2 neighboring to each other. The wireless terminal 3, before the handover, receives a downlink packet from the base station 2-1 and, after the handover, receives the downlink packet from the base station 2-2. Wireless line quality information necessary for the handover is transmitted as an uplink packet to the base stations 2-1 and 2-2 from the wireless terminal 3.

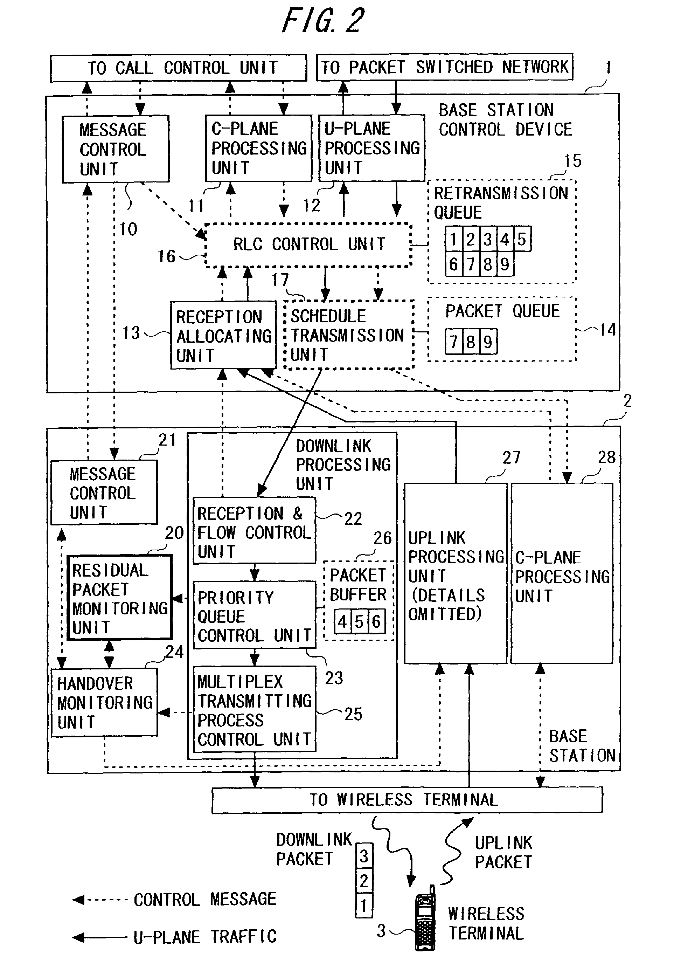

FIG. 2 shows an outline of a downlink packet data transfer during the high speed packet communications based on the HSDPA system between the base station control device 1 and the base station 2, together with detailed configurations of the base station control device 1 and of the base stations 2 (2-1, 2-2) in the mobile communication system SYS shown in FIG. 1. Note that FIG. 2 shows a status just before occurrence of the handover, which is triggered by the wireless terminal 3 moving to the service area under the control of the base station (B) 2-2 from the base station (A)2-1 in FIG. 1. In FIG. 2, an arrow of solid line represents a flow of U-Plane (User data transfer Plane) traffic, and an arrow of dotted line represents a flow of a control message.

### (Base Station Control Device)

A main function of the base station control device 1 is to conduct protocol translation and to switch over a channel (wireless channel) between a higher (high-order) network 4 and the base station 2, and further to control a plurality of base stations 2 connected to the control device 1. Moreover, the base station control device 1 has, in addition to the function described above, a high-speed packet communication function based on the HSDPA system.

The base station control device 1 includes components that will be mentioned next in order to implement, together with these functions, when the handover occurs between the plural base stations 2 (2-1, 2-2) operating under the self-device, a function of transmitting a packet associated with a piece of not-yet-arrived packet information to the handover recipient (mobile destination: visited) base station 2-2 in preference to a transmission standby packet within the base station control device 1 in such a way that the handover originator (mobile source) base station 2-1 notifies the control device 1 of the not-yet-arrived (untransmitted) packet information.

As shown in FIG. 2, the base station control device 1 includes a message control unit 10 that receives and sends a message for controlling the base stations 2, a C (Control: Control signal)-Plane processing unit 11 for receiving and sending a message for controlling the wireless terminal 3, a U (User: User data transfer)-Plane processing unit 12 that processes the user (user data) traffic, a reception allocating unit 13 that processes the data received from the base stations 2, a packet queue 14 for storing the transmission standby packets, a retransmission queue 15 for storing fail-to-transmit packets to be transmitted when a retransmission request is given, an RLC (Radio Link Control) control unit 16 that controls an RLC (Radio Link Control) protocol process, and a schedule transmission unit 17 that performs scheduling of the transmission of the downlink packet data.

To give a further in-depth description, in the base station control device 1, the message control unit 10 sends and receives the control system message between a call control unit (within the network 4) on a higher layer and a message control unit (21) of the base station 2. The C-Plane processing unit 11 executes a sending/receiving process of the control system message to and from the call control unit on the higher layer and performs a role of an interface with the higher layer. The U-Plane processing unit 12 executes a sending/receiving process of the U-Plane data to and from the higher layer. The reception allocating unit 13 receives the U-Plane data or the control system message transmitted from the base station 2 and executes a process of allocating the respective items of data.

Moreover, the packet queue 14 is a queue for storing the transmission stand by packets, wherein the packets, according to the HSDPA system, need transmitting with a transmission-enabled bandwidth from the base station 2, might stand by for their transmission and are therefore queued in this packet queue 14. The retransmission queue 15 is a queue for storing the packet for retransmission and is queued with an arrival-not-yet-acknowledged packet of which arrival acknowledgment is to be returned from the wireless terminal 3.

Further, the RLC control unit 16 executes the RLC (Radio Link Control) protocol process defined as the central function of the base station control device 1. When the handover takes place, the residual packet information is transferred as the not-yet-arrived packet information to the RLC control unit 16 via the message control unit 10 from the base station 2, whereby the RLC control unit 16 then transfers the not-yet-arrived packet from the retransmission queue 15 to the schedule transmission unit 17 and controls the schedule transmission unit 17 to preferentially transmit the not-yet-arrived packet. The schedule transmission unit 17 executes the scheduling process of the packet for transmission.

### (Base Station)

The main function of the base station 2 is to translate the data given from a wired line on the side of the base station control device 1 into a data format adapted to the wireless interface and carry the thus-formatted data through on a radio frequency to the wireless terminal 3 existing within the service area, or conversely, to receive the data carried through on the radio frequency from the wireless terminal 3, then translate the data into a data format adapted to a wired interface and carry the thus-formatted data toward the base station control device 1. Further, the base station 2 has, in addition to the functions described above, the high speed packet communication function based on the HSDPA system.

The base station 2 includes components that will be described next, together with these functions, in order to detect a start of the handover performed between the neighboring base stations 2 under the same base station control device 1 and to transmit, to the base station control device 1, the residual packet information about the not-yet-arrived packet that still remains untransmitted to the wireless terminal 3 when the handover occurred.

As illustrated in FIG. 2, the base station 2 includes a residual packet monitoring unit 20 that accumulates the information (residual packet information) about the not-yet-arrived packet remaining untransmitted, a message control unit 21 receiving and sending the residual packet information and a handover request notification, a reception & flow control unit 22 executing a process of receiving the downlink packet data from the base station control device 1 and flow control thereof, a priority queue control unit 23 that effects queue control of the transmission packets, a handover monitoring unit 24 detecting the start of the handover, a multiplex transmission process control unit 25 executing the transmission process to the wireless terminal 3, a packet buffer 26 for storing the packets to be transmitted by the priority queue control unit 23, an uplink processing unit 27 executing a process of receiving the uplink packet from the wireless terminal 3, and a C-Plane processing unit 28 that sends and receives the control system message between the base station control device 1 and the wireless terminal 3. Herein, the downlink processing unit is constructed of the reception & flow control unit 22, the priority queue control unit 23, the multiplex transmission process control unit 25 and the packet buffer 26.

To give a more detailed description, in the base stations 2 (2-1, 2-2), the residual packet monitoring unit 20, when the handover occurs, accumulates the residual packet information on the not-yet-arrived packet remaining untransmitted to the wireless terminal 3. The message control unit 21 sends and receives the control system message to and from the base station control device 1. This message control unit 21, when the handover occurs, transmits the residual packet information accumulated by the residual packet monitoring unit 20 to the base station control device 1 via the handover monitoring unit 24.

The reception & flow control unit 22 executes the process of receiving the packet transmitted from the base station control device 1 and transfers the packet to the priority queue control unit 23. The reception & flow control unit 22 determines a bandwidth enabling the transmission from the base station control device 1, corresponding to a wireless status with respect to the wireless terminal 3, and sends this determined bandwidth by a flow control packet. The priority queue control unit 23 judges a priority level of the packet to be transmitted to the wireless terminal 3, and stores the packet buffer 26 with the packets for transmission in the sequence according to the priority level.

The handover monitoring unit 24 detects the handover and, when starting the handover, transmits the residual packet information accumulated by the residual packet monitoring unit 20 to the base station control device 1 via the message control unit 21. The multiplex transmission process control unit 25 multiplexes plural pieces of packet data buffered on the packet buffer 26 by the priority queue control unit 23 according to the priority level, and transmits the multiplexed packet data to the wireless terminal 3.

The packet buffer 26 is a buffer memory for storing the packet to be transmitted to the wireless terminal 3. The uplink processing unit 27 executes a process of receiving the data transmitted from the wireless terminal 3. The C-Plane processing unit 28 sends and receives the uplink and downlink control system messages transferred and received between the base station control device 1 and the wireless terminal 3.

### [Operation of Mobile Communication System]

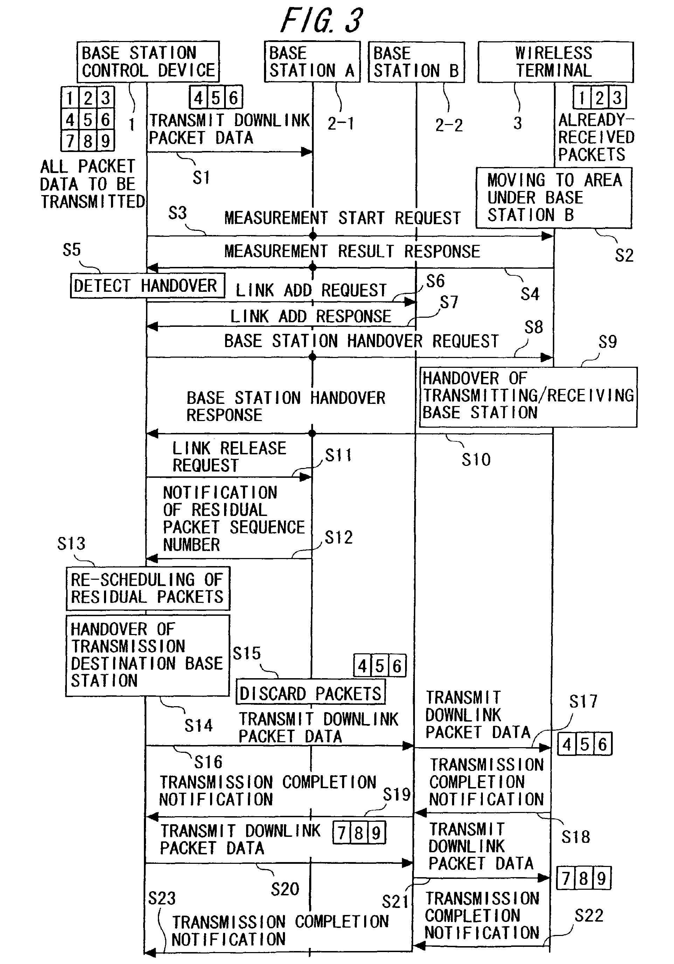

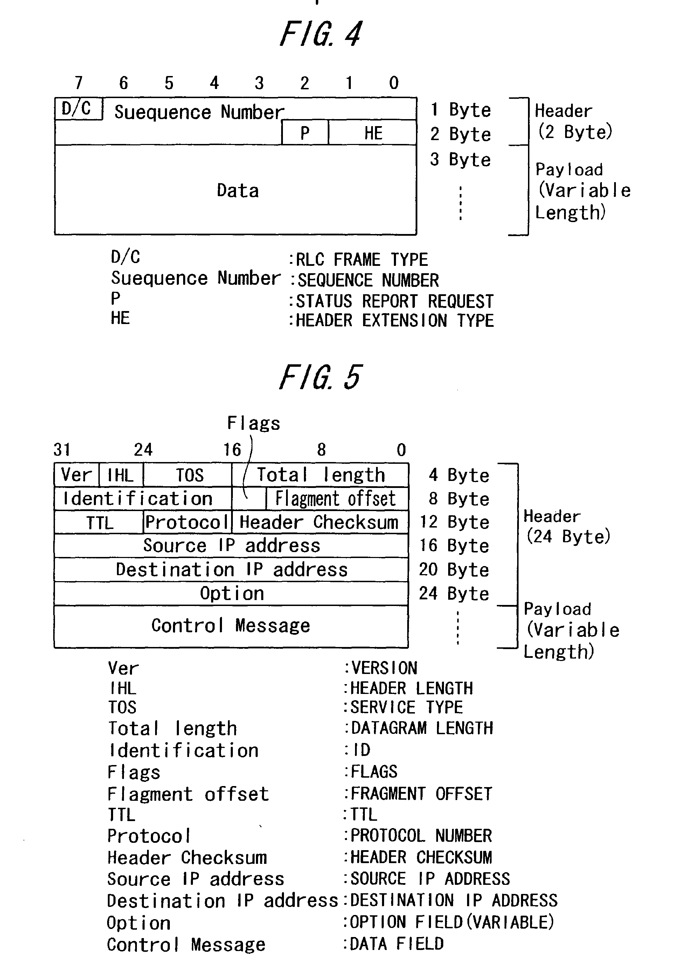

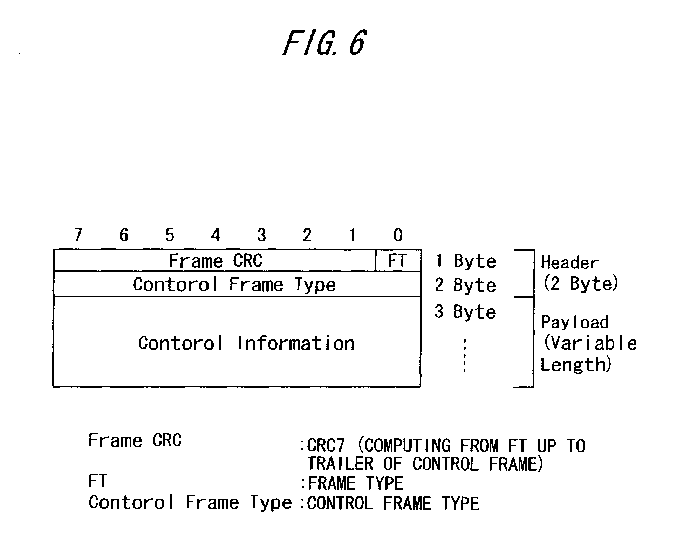

Next, an operational example of the mobile communication system SYS in one embodiment of the invention illustrated in FIGS. 1 and 2 will hereinafter be described with reference to in FIGS. 1 through 6 in combination. FIG. 3 is a sequence diagram showing a procedure of a wireless communication control method in one embodiment. FIG. 4 shows a PDU (Protocol Data Unit) frame format, FIG. 5 shows an IP (Internet Protocol) frame format, and FIG. 6 shows a UL HS-DSCH (Up Link High Speed-Downlink Shared Channel) frame format.

In this mobile communication system SYS, all the packets to be transmitted shall be assigned sequence numbers of [1 through 9], wherein the packets [1, 2, 3] have already been transmitted to the wireless terminal 3, however, a transmission completion notification to be sent by the wireless terminal 3 is in a not-yet-transmitted status. FIG. 2 shows a status in which the base station control device 1 transmits the next packets [4, 5, 6] to the base station (A) 2-1 (step S1), and the packet buffer 26 is buffered with the packets [4, 5, 6].

When the wireless terminal 3 moves to (visits) a service area of the base station (B) 2-2 neighboring to the base station (A) 2-1 (step S2), the base station control device 1 sends a measurement start request to the wireless terminal 3 via the C-Plane processing unit 28 within the base station (A) 2-1 (step S3). The wireless terminal 3 sends a measurement result response (wireless line quality information such as packet loss information) to the base station control device 1 via the C-Plane processing unit 28 within the base station (A)2-1 (step S4).

The base station control device 1, when receiving the measurement result response and judging that the handover occurs (step S5), sends a link add request to the base station (B)2-2 (step S6), and, if added successfully, the base station (B)2-2 sends a link add response (step S7).

After step S7, the base station control device 1 sends a base station switchover (handover) request to the wireless terminal 3 via the C-Plane processing unit 28 within the base station (A)2-1 (step S8). The wireless terminal 3 effects the handover of the transmitting/receiving base station from the base station (A)2-1 to the base station (B)2-2 (step S9), and sends a base station handover response to the base station control device 1 via the C-Plane processing unit 28 within the base station (A)2-1 (step S10).

The base station control device 1 sends a link release request to the handover source base station (A) 2-1 (step S11) . The link release request is transferred to the handover monitoring unit 24 via the message control unit 21, and the handover monitoring unit 24 detects the handover and sends, together with a response to the link release request, the RLC PDU sequence number (see FIG. 4) of the residual packet accumulated on the residual packet monitoring unit 20 to the base station control device 1 (step S12).

Herein, the not-yet-transmitted packets [4, 5, 6] to the wireless terminal 3 become the residual packets, and the base station control device 1 is notified of the sequence numbers of these residual packets. It is to be noted that the notification of the RLC PDU sequence number information of the residual packet may involve using an IP frame based control message transferred and received between the base station control device 1 and the base station 2 as shown in FIG. 5 or control information of the UL HS-DSCH frame illustrated in FIG. 6.

In step S12, the RLC control unit 16 within the base station control device 1, which has been notified of the sequence numbers of the residual packets, enables the preferential transmission of the packets [4, 5, 6] corresponding to the transferred sequence numbers in a way that instructs the schedule transmission unit 17 to do re-scheduling so as to transmit the packets [4, 5, 6] ahead of the already-scheduled packets [7, 8, 9] without retransmitting the packets [1, 2, 3] even in a not-yet-received status of the transmission completion notification of the packets [1, 2, 3] transmitted earlier than the packets having the notified sequence numbers (step S13).

Next, the base station control device 1 carries out the handover of the downlink packet transmission destination base station from the base station (A)2-1 to the base station (B) 2-2 (step S14). After the handover, the handover source base station (A) 2-1 discards the packets [4, 5, 6] remaining within the packet buffer 26 (step S15).

After step S15, the schedule transmission unit 17 transmits the packets [4, 5, 6] to the base station (B) 2-2 (step S16). The base station (B) 2-2, after receiving the packets [4, 5, 6] through the reception & flow control unit 22, transmits the packets [4, 5, 6] to the wireless terminal 3 via the priority queue control unit 23 and the multiplex transmission process control unit 25 (step S17). The wireless terminal 3, after receiving the packets [4, 5, 6], sends the transmission completion notification to the base station (B) 2-2 (step S18). The base station (B)20-2 sends the transmission completion notification to the base station control device 1 (step S19). After the RLC control unit 16 has received the transmission completion notification, the packets [7, 8, 9] are transmitted to the wireless terminal 3 in the same procedure as by steps S16 - S19 (steps S20 - S23).

Originally, the packets [7, 8, 9] queued in the packet queue 14 are to be transmitted ahead of the packets [4, 5, 6], however, as explained above, the wireless terminal 3 has no necessity for the retransmission request by preferentially transmitting the not-yet-transmitted packet, whereby the futile transmission of the retransmission packet can be restrained.

### [Modified Example]

The processes in one embodiment discussed above are provided as a program executable by a computer, and can be also provided in the form of a storage medium such as a CD-ROM and a flexible disc and further through a communication line.

Moreover, the respective processes in one embodiment discussed above can be also carried out in a way that selects and combines arbitrary plural processes or all the processes.

## Claims

1. A wireless communication system having a high speed packet communication function, which is based on an HSDPA (High Speed Downlink Packet Access) system, the wireless communication system including a base station control device,
the base station control device comprising:
means receiving from a handover source base station, when handover of a wireless terminal occurs between plural base stations under control, residual packet information about a packet remaining untransmitted to the wireless terminal from the handover source base station; and
means transmitting, when receiving the residual packet information, a packet corresponding to the residual packet information to a handover destination base station in preference to a packet in a next transmission standby status.

2. A base station control device to be applied to a wireless communication system having a high speed packet communication function, which is based on an HSDPA (High Speed Downlink Packet Access) system, comprising:
means receiving from a handover source base station, when handover of a wireless terminal occurs between plural base stations under control, residual packet information about a packet remaining untransmitted to the wireless terminal from the handover source base station; and
means transmitting, when receiving the residual packet information, a packet corresponding to the residual packet information to a handover destination base station in preference to a packet in a next transmission standby status.

3. A base station to be applied to a wireless communication system having a high speed packet communication function, which is based on an HSDPA (High Speed Downlink Packet Access) system, comprising:
means notifying a base station control device of, when handover of a wireless terminal occurs, residual packet information about a packet remaining untransmitted to the wireless terminal.

4. A control method executed in a base station control device of a wireless communication system having a high speed packet communication function, which is based on an HSDPA (High Speed Downlink Packet Access) system, the control method comprising:
receiving from a handover source base station, when handover of a wireless terminal occurs between plural base stations under control, residual packet information about a packet remaining untransmitted to the wireless terminal from the handover source base station; and
transmitting, when receiving the residual packet information, a packet corresponding to the residual packet information to a handover destination base station in preference to a packet in a next transmission standby status.

5. A wireless communication system according to Claim 1, wherein the residual packet information is specified by a sequence number of an RLC PDU (Radio Link Control Protocol Data Unit) frame.

6. A wireless communication system according to Claim 1, wherein the residual packet information is specified by a control message of an IP (Internal Protocol) frame.

7. A wireless communication system according to Claim 1, wherein the residual packet information is specified by control information of a UL HS-DSCH (Up Link High Speed-Downlink Shared Channel) frame.

8. A base station control device according to Claim 2, wherein the residual packet information is specified by a sequence number of an RLC PDU (Radio Link Control Protocol Data Unit) frame.

9. A base station control device according to Claim 2, wherein the residual packet information is specified by a control message of an IP (Internal Protocol) frame.

10. A base station control device according to Claim 2, wherein the residual packet information is specified by control information of a UL HS-DSCH (Up Link High Speed-Downlink Shared Channel) frame.
